# EUROPÄISCHE PATENTSCHRIFT

(11) **EP 0 291 842 B1**
(45) Veröffentlichungstag und Bekanntmachung des Hinweises auf die Patenterteilung: **07.01.1993**
(21) Anmeldenummer: 88107575.8
(22) Anmeldetag: 11.05.1988
(51) Int. Cl.: G03B 27/16

(54) **Verfahren zum Betreiben eines Belichtungsgeräts in der reprografischen Technik und Belichtungsgerät zur Durchführung dieses Verfahrens**
Functioning method of an illuminating apparatus in reproduction techniques, and such an apparatus
Méthode de fonctionnement d'un appareil d'illumination dans la technique reprographique, et un tel appareil

(30) Priorität: 19.05.1987 DE 3716694
(43) Veröffentlichungstag der Anmeldung: 23.11.1988
(73) Patentinhaber: SIEGFRIED THEIMER GMBH, 63633 Birstein (DE)
(72) Erfinder: Vogel, Helmut, Wächtersbach (DE)
(74) Vertreter: Nix, Frank Arnold, Dr.

(56) Entgegenhaltungen:
- DE-A- 1 522 142
- DE-A- 3 218 096
- US-A- 3 914 649

## Beschreibung

Die vorliegende Erfindung bezieht sich auf die Belichtung von Fotomaterialien in der reprografischen Technik. Es geht dabei um die Belichtung insbesondere von Filmen und Druckplatten, wobei die Belichtungsgeräte als Lichtquelle eine oder mehrere Metall-Halogenid-Lampen aufweisen.

Metall-Halogenid-Lampen müssen zum Erreichen des gewünschten Spektrums des Lichtstroms eine bestimmte Mindesttemperatur des Entladungsgefäßes haben. Bei Unterschreiten dieser Temperatur kondensieren zunächst die Metallhalogenide, die für die Anreicherung bestimmter Spektrallinien eingebracht wurden, wodurch das Emissionsspektrum der Lampe bei wenig veränderter Leistungsaufnahme auf das einer undotierten Quecksilberdampflampe zurückfällt. Bei noch weiterer Absenkung der Temperatur kondensiert dann auch zunehmend Quecksilber, wodurch der Innendruck und damit die Leistungsaufnahme der Lampe absinkt.

In der grafischen Industrie wird zur Belichtung insbesondere von UV-empfindlichen Filmen und Druckplatten eine möglichst konstante Strahlungsemission gefordert.

Hieraus resultiert die Forderung nach konstanter Lampentemperatur, was bedeuten würde, daß die Lampe kontinuierlich mit der vollen Belichtungsleistung brennt. Dies wäre deswegen ungünstig, weil Belichtungen nur relativ kurze Zeitspannen dauern und sich zwischen diesen Unterbrechungen ergeben, in denen der Lichtstrom nicht benötigt wird. Dies ergibt sich daraus, daß vor jeder Belichtung das Belichtungsgut (Vorlage und Fotomaterial) in Position gebracht werden muß und gewöhnlich noch durch Wirkenlassen eines Vakuums in innige Berührung gebracht wird. Die hierfür notwendigen Zeiträume liegen typischerweise bei zwei Minuten.

Es sind zwar Lampen entwickelt worden, die in den Pausen zwischen den Belichtungen vollständig abgeschaltet werden und für jede Belichtung jeweils wieder von kalt gestartet werden. Dies ist jedoch wegen der erforderlichen Anlaufzeiten in der Größenordnung von 30 Sekunden unbefriedigend.

Da sich also das vollständige Abschalten der Lampe zwischen den Belichtungen in den meisten Anwendungsfällen verbietet und das kontinuierliche Brennenlassen mit voller Leistung wegen des erforderlichen Energieverbrauchs, der notwendigen Kühlung sowie des Einflusses auf die Lebensdauer nachteilig ist, werden die Belichtungsgeräte gewöhnlich in den Pausen zwischen den Belichtungen auf einen Bereitschafts-Wartebetrieb reduzierter Leistung ("Stand-by-Leistung") umgeschaltet.

Bei den bekannten Belichtungsverfahren ist eine bestimmte Wartebetriebsleistung vorgesehen, die bei Umschaltung auf die volle Belichtungsleistung praktisch unverzüglich fast den vollen Lichtstrom des erforderlichen Spektrums zur Verfügung stellt. Diese Wartebetriebsleistungen liegen gewöhnlich im Bereich von 35 % bis 60 % der vollen Belichtungsleistung (elektrischen Leistung).
Die vorliegende Erfindung setzt bei der Erkenntnis ein, daß nicht alle Fotomaterialien ein Belichtungsverfahren entsprechend den vorstehenden Ausführungen zwingend erfordern. Bei Fotomaterial, dessen Belichtungszeiten im Minutenbereich liegen, etwa Druckplatten, kann eine gewisse Anlaufzeit bei Belichtungsbeginn toleriert werden. Ohne wesentliche Qualitätsverluste kann hier die Wartebetriebsleistung soweit abgesenkt werden, daß eine teilweise Kondensation der Metallzusätze eintritt, wobei diese dann in der ersten Phase der Belichtung durch die hierbei eintretende Temperaturerhöhung wieder verdampfen. Andererseits gibt es Fotomaterialien, die unbedingt erfordern, daß die Lampe vom ersten Augenblick der Belichtung an das richtige Emissionsspektrum abgibt. Solche Materialien tolerieren kein "Hochlaufen" der Lampe während der Belichtung.

Aufgabe der Erfindung ist demgemäß die Schaffung eines Verfahrens zum Betrieb eines Belichtungsgeräts, mit dem zwischen den gegensätzlichen Forderungen an den Bereitschafts-Wartebetrieb ein jeweils günstiger Kompromiß verwirklicht werden kann. Es soll mithin der Betrieb flexibel an die jeweiligen Erfordernisse des Fotomaterials angepaßt werden können.

Die Lösung der gestellten Aufgabe gelingt dadurch, daß die Höhe der Wartebetriebsleistung der Lampe in Abhängigkeit von den Eigenschaften des Fotomaterials gewählt wird, und zwar so, daß bei kurze Belichtungszeiten erforderndem Material die höhere Wartebetriebsleistung gewählt wird und bei längere Belichtungszeiten erforderndem Material die niedrigere Wartebetriebsleistung gewählt wird.

Das erfindungsgemäße Belichtungsgerät zur Durchführung dieses Betriebsverfahrens hat also mindestens zwei wählbare Pegel des Bereitschafts-Wartebetriebs, die je nach dem zu belichtenden Fotomaterial eingeschaltet werden. Dabei muß bei der Belichtung von kurz zu belichtendem und wenig tolerantem Fotomaterial die höhere Bereitschaftsleistung gewählt werden, während bei der Belichtung von längere Belichtungszeiten erforderndem und toleranterem Fotomaterial die Bereitschaftsleistung weiter abgesenkt werden kann.

An sich sind aus der DE-A-1 522 142 Belichtungsgeräte bekannt, deren Lampen auf mehr als zwei Leistungsniveaus umgeschaltet werden können; immer handelt es sich hierbei jedoch um nur eine bestimmte Bereitschaftsleistung, während für die Belichtung verschiedene Leistungsniveaus gewählt werden können.

Zweckmäßige Weiterbildungen der Erfindung ergeben sich aus den Unteransprüchen.

Die Erfindung erlaubt es dem Benutzer, zu wählen zwischen einer niedrigen Wartebetriebsleistung mit entsprechend niedrigem Energieverbrauch und geringem Kühlluftbedarf, aber einer gewissen Hochlaufzeit mit der damit verbundenen Spektralverschiebung der Emission bei Verwendung von Materialien, die in dieser Hinsicht nicht kritisch sind, und andererseits einer erhöhten Wartebetriebsleistung für die Anwendungsfälle, in denen die Lampe auf der optimalen Arbeitstemperatur gehalten werden muß, damit zu Beginn einer Belichtung sofort das optimale Emissionsspektrum zum Erzielen reproduzierbarer Ergebnisse zur Verfügung steht.

Die Anwendung dieses Konzeptes hat vor allem eine Energieersparnis zur Folge, weil die bisher eingesetzten Lampen grundsätzlich mit Vorrang für die Abgabe eines konstanten Spektrums entworfen sind und damit für eine Vielzahl der Fälle eine unnötige hohe Wartebetriebsleistung verbrauchen.

Die Erfindung wird nachfolgend weiter erläutert. Es zeigt:
Fig. 1 ein Diagramm der von einer Metall-Halogenid-Lampe während der Anlaufphase abgegebenen UV-Leistung;
Fig. 2 eine erste Speiseschaltung der Lampe eines Belichtungsgeräts;
Fig. 3 eine zweite Speiseschaltung;
Fig. 4 eine dritte Speiseschaltung und
Fig. 5 eine vierte Speiseschaltung.

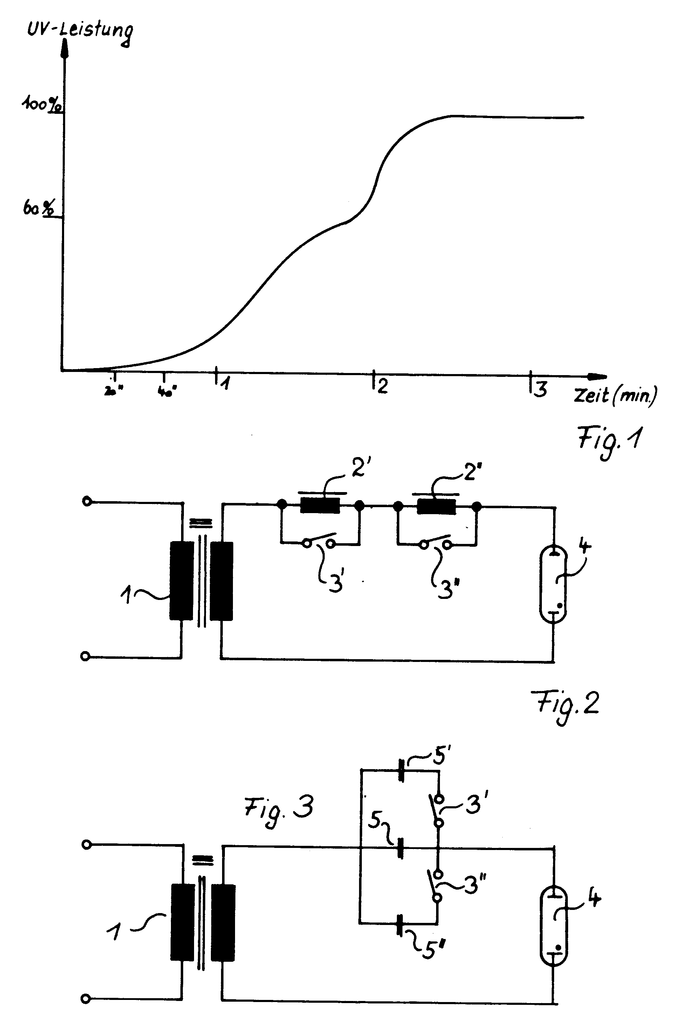

Die typische Anlaufkurve einer Metall-Halogenid-Lampe gemäß Fig. 1 zeigt, daß eine relativ lange Zeit vergeht, bevor überhaupt eine nennensswerte UV-Leistung erzeugt wird. Dies hängt damit zusammen, daß die kalte Lampe nur eine recht geringe Leistung aufnimmt und diese geringe Leistung den Lampenkörper auch nur relativ langsam erwärmt. Ist einmal eine gewisse Erwärmung erreicht, steigt damit auch die Leistungsaufnahme und die Erwärmung schreitet schneller fort.

Wenn die Lampe mit einer sehr niedrigen Wartebetriebsleistung betrieben wird, ist es trotzdem möglich innerhalb einer für viele Prozesse akzeptable Zeit auf die volle Ausgangsleistung zu kommen. Diese Zeit kann, z. B. bei 15 Sekunden liegen.

Wenn die Stand-by-Leistung ausreichend hoch angesetzt wird, ergibt sich keine merkliche Leistungsänderung schon von Anbeginn der Belichtung an.

Fig. 2 bis 5 zeigen Speiseachaltungen für eine Lampe 4. Wegen der fallenden Strom-Spannungs-Kennlinie von Hochdrucklampen ist zum stabilen Betrieb eine strombegrenzende Impedanz in Reihe mit der Lampe erforderlich. Üblich ist deshalb die kostengünstige Verwendung von Streufeldtransformatoren 1, die nicht nur die Spannung auf die gewünschte Höhe transformieren, sondern auch eine Drosselwirkung haben und den Strom auf einen bestimmten Wert begrenzen.

Zur Änderung der Leistung des Bereitschafts-Wartehetriebs sind in der Ausbildung gemäß Fig. 2 zwei Drosseln 2 ', 2 '' vorgesehen, die mittels je eines Schalters 3 ', 3 '' überbrückbar sind. Es handelt sich mithin um ein rein induktives Gerät, wobei die Leistung der Lampe 4,z. B. 1000 Watt betragen kann, wenn beide Schalter 3 ', 3 '' offen sind, dagegen 3000 Watt, wenn einer der Schalter geschlossen ist und 5000 Watt, wenn beide Schalter geschlossen sind. Werden die Drosseln 2 ', 2 '' mit verschiedener Induktivität gewählt, so ergibt sich die Möglichkeit der Verwirklichung weiterer Leistungsstufen.

Fig. 3 zeigt ein kapazitives Gerät, bei dem in den Speisekreis der Lampe 4 ein Kondensator 5 fest eingeschaltet ist und zu diesem mittels Schaltern 3 ', 3 '' zwei weitere Kondensatoren 5 ', 5 '' parallel geschaltet werden können. Diese Speisung über Kapazitäten ist im Hinblick auf die Verringerung des hohen Einschaltspitzenstroms günstiger und zeigt ein Verhalten, bei dem der Strom fast unabhängig von der gelieferten Spannung ist.

Sind beide Schalter 3 ′ , 3 ˝ offen, so hat die Lampe eine Leistung von, z. B. 1000 Watt, bei einem geschlossenen Schalter eine Leistung von 3000 Watt und sind beide Schalter geschlossen, so hat sie eine Leistung von 5000 Watt. Auch hier ergeben sich mehr Schaltstufen bei verschiedenen Größen der Kondensatoren 5′ und 5 ˝.

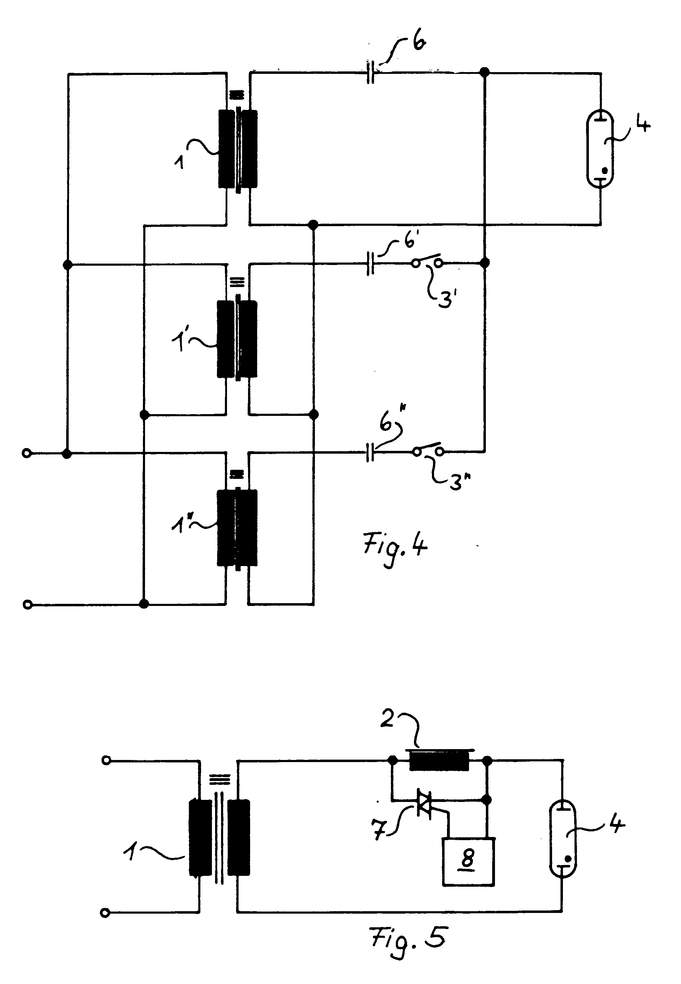

Fig. 4 zeigt eine Speiseschaltung mit drei parallelen Vorsatzgeräten mit je einem Streufeldtransformator 1, 1 ′ und 1 ˝, die über Kondensatoren 6, 6 ′ und 6 ˝ zur Speisung der Lampe 4 dienen. In zwei Kreisen sind Schalter 3 ′, 3 ˝ vorgesehen, so daß diese wahlweise zu-bzw. abgeschaltet werden können, wodurch sich die verschiedenen Speisemöglichkeiten ergeben.

Fig. 5 zeigt schließlich eine Speisung über eine Drossel 2, die durch einen steuerbaren Triac 7 überbrückt ist, wobei die Leistung der Lampe 4 mittels des Steuergeräts 8 des Triac 7 einstellbar ist. Hier findet somit eine Phasenanschnittsteuerung statt.

## Patentansprüche

1. Verfahren zum Betreiben eines Belichtungsgeräts mit Metall-Halogenid-Lampen zur Belichtung von Fotomaterialien in der reprografischen Technik, bei dem zwischen den mit voller Leistung erfolgenden Belichtungen die Lampe auf einen Bereitschafts-Wartebetrieb reduzierter Leistung zurückgeschaltet wird,
dadurch gekennzeichnet, daß die Höhe der Bereitschafts-Wartebetriebsleistung in Abhängigkeit von den Eigenschaften der Fotomaterialien so gewählt wird, daß bei kurze Belichtungszeiten erforderndem Material eine höhere Wartebetriebsleistung gewählt wird und bei längere Belichtungszeiten erforderndem Material eine niedrigere Wartebetriebsleistung gewählt wird.

2. Belichtungsgerät zur Durchführung des Verfahrens nach Anspruch 1 mit Metall-Halogenid-Lampen zur Belichtung von Fotomaterialien in der reprografischen Technik und mit einem steuerbaren Vorschaltgerät zur Speisung der Lampe, das einen Umschalter zur Umschaltung zwischen einem Belichtungsbetrieb und einem Bereitschafts-Wartebetrieb reduzierter Leistung aufweist,
dadurch gekennzeichnet, daß am Steuergerät wenigstens zwei Leistungsniveaus des Bereitschafts-Wartebetriebs in Abhängigkeit von den Eigenschaften der Fotomaterialien wählbar sind.

3. Belichtungsgerät nach Anspruch 2, dadurch gekennzeichnet, daß die Leistung des Bereitschafts-Wartebetriebs zwischen 10 % und 60 % des Belichtungsbetriebs einstellbar ist.

4. Belichtungsgerät nach einem der Ansprüche 2 oder 3, dadurch gekennzeichnet, daß die Steuerung eines Kühlluftventilators gleichsinnig mit der Steuerung der Lampenleistung erfolgt.

5. Belichtungsgerät nach einem der Ansprüche 2 bis 4, dadurch gekennzeichnet, daß in den Speisekreis der Lampe (4) wenigstens zwei überbrückbare Drosseln (2', 2'') geschaltet sind.

6. Belichtungsgerät nach einem der Ansprüche 2 bis 4, dadurch gekennzeichnet, daß im Speisekreis der Lampe (4) ein Kondensator (5) und wenigstens zwei diesem parallel zuschaltbare weitere Kondensatoren (5', 5'') liegen.

7. Belichtungsgerät nach einem der Ansprüche 2 bis 4, gekennzeichnet durch wenigstens drei Vorschaltgeräte zur Speisung der Lampe (4), von denen das eine die niedrigste Bereitschafts-Wartebetriebsleistung liefert und ständig angeschlossen ist, während die übrigen wahlweise zuschaltbar sind (Fig. 4).

8. Belichtungsgerät nach einem der Ansprüche 2 bis 4, dadurch gekennzeichnet, daß in den Speisekreis der Lampe (4) eine durch einen steuerbaren Triac (7) überbrückte Drossel (2) geschaltet ist.

## Claims

1. Process for operating an exposure device having metal halide lamps for exposing photomaterials in reprographic technology in which, between the exposures carried out at full power, the lamp is switched back to a stand-by-hold mode of reduced power,
characterised in that the level of the stand-by-hold mode power is selected dependent on the properties of the photomaterials so that in the case of material requiring short exposure times a higher hold mode power is selected and in the case of material requiring longer exposure times a lower hold mode power is selected.

2. Exposure device for carrying out the process according to claim 1 having metal halide lamps for exposing photomaterials in reprographic technology and having a controllable power supply unit for supplying the lamp which has a switch for switching between an exposure mode and a stand-by-hold mode of reduced power,
characterised in that on the control device at least two power levels of the stand-by-hold mode can be selected dependent on the properties of the photomaterials.

3. Exposure device according to claim 2, characterised in that the power of the stand-by-hold mode can be set between 10% and 60% of the exposure mode.

4. Exposure device according to one of claims 2 or 3, characterised in that control of a cool air ventilator occurs in the same direction as control of the lamp power.

5. Exposure device according to one of claims 2 to 4, characterised in that at least two bridgeable inductors (2', 2") are connected into the supply circuit of the lamp (4).

6. Exposure device according to one of claims 2 to 4, characterised in that lying in the supply circuit of the lamp (4) are a capacitor (5) and at least two further capacitors (5', 5") which can be connected in parallel to this.

7. Exposure device according to one of claims 2 to 4, characterised by at least three power supply units for supplying the lamp (4), one of which supplies the lowest stand-by-hold mode power and is permanently connected, whilst the others can be optionally connected (Fig.4).

8. Exposure device according to one of claims 2 to 4, characterised in that connected into the supply circuit of the lamp (4) is an inductor (2) bridged by a controllable triac (7).

## Revendications

1. Procédé d'exploitation d'un dispositif d'éclairage équipé de lampes à halogénure métallique pour l'exposition de produits photosensibles en reprographie, procédé selon lequel, entre les expositions réalisées à pleine puissance, on ramène la lampe dans un mode de fonctionnement de repos et d'attente à puissance réduite, caractérisé par le fait que la valeur de la puissance au repos est sélectionnée en fonction des caractéristiques du produit photosensible de manière telle que, en présence d'un produit à temps d'exposition court, la puissance au repos est plus élevée et, en présence d'un produit à temps d'exposition plus long, la puissance au repos est plus faible.

2. Dispositif d'éclairage pour la mise en oeuvre du procédé selon la revendication 1, comportant des lampes à halogénure métallique pour l'exposition de produits photosensibles en reprographie ainsi qu'un appareil de réglage de puissance commandé pour l'alimentation de la lampe, appareil qui présente un commutateur assurant la commutation entre un mode de fonctionnement exposition et un mode de fonctionnement de repos et d'attente à puissance réduite, caractérisé par le fait que l'appareil de commande permet de sélectionner au moins deux niveaux de puissance du mode de fonctionnement de repos et d'attente en fonction des caractéristiques du produit photosensible.

3. Dispositif d'éclairage selon la revendication 2, caractérisé par le fait que la puissance du mode de fonctionnement de repos et d'attente est réglable entre 10 et 60% de la valeur en mode de fonctionnement exposition.

4. Dispositif d'éclairage selon l'une des revendication 2 ou 3, caractérisé par le fait que l'on fait varier la puissance d'un ventilateur d'air de refroidissement dans le même sens que la puissance de la lampe.

5. Dispositif d'éclairage selon l'une des revendication 2 à 4, caractérisé par le fait qu'il est prévu dans le circuit d'alimentation de la lampe (4) au moins deux selfs (2', 2") pouvant être pontées sont montées.

6. Dispositif d'éclairage selon l'une des revendication 2 à 4, caractérisé par le fait qu'il est prévu dans le circuit d'alimentation de la lampe (4) au moins un condensateur (5) et au moins deux condensateurs (5', 5") supplémentaires qui peuvent être branchés en parallèle avec celui-ci.

7. Dispositif d'éclairage selon l'une des revendication 2 à 4, caractérisé par au moins trois dispositifs de réglage pour l'alimentation de la lampe (4) parmi lesquels l'un délivre la puissance la plus faible pour le mode de fonctionnement de repos et d'attente et est connecté en permanence, tandis que les autres sont connectés de manière sélective (Figure 4).

8. Dispositif d'éclairage selon l'une des revendication 2 à 4, caractérisé par le fait qu'il est prévu dan le circuit d'alimentation de la lampe (4) une bobine (2) qui est pontée par un triac (7) commandé.
